# EUROPEAN PATENT SPECIFICATION

(11) **EP 3 795 381 B1**
(45) Date of publication and mention of the grant of the patent: **04.10.2023**
(21) Application number: 19823647.3
(22) Date of filing: 13.06.2019
(51) Int. Cl.: B60C 11/00, B60C 9/18, B60C 9/28

(54) **PNEUMATIC TYRE**
LUFTREIFEN
BANDAGE PNEUMATIQUE

(30) Priority: 18.06.2018 JP 2018115412
(43) Date of publication of application: 24.03.2021
(73) Proprietor: Bridgestone Corporation, Chuo-Ku Tokyo 104-8340 (JP)
(72) Inventor: ARIMA, Masayuki, Tokyo 104-8340 (JP); HASEGAWA, Keiichi, Tokyo 104-8340 (JP)
(74) Representative: Marks & Clerk LLP
(86) International application number: PCT/JP2019/023513
(87) International publication number: WO 2019/244771

(56) References cited:
- EP-A1- 2 233 320
- WO-A1-2006/066602
- WO-A1-2018/012640
- JP-A- H05 310 009
- JP-A- 2009 262 779
- JP-A- 2009 513 429
- JP-A- 2015 037 943
- JP-A- 2017 517 429
- JP-A- 2018 083 596
- JP-A- 2018 508 406
- US-A1- 2016 068 022
- US-A1- 2016 159 154

## Description

### TECHNICAL FIELD

The present invention relates to a pneumatic tire including a belt provided with a resin layer.

### BACKGROUND ART

Pneumatic tires to be mounted at automobiles include pneumatic tires that are provided with a belt including a resin layer at a tire diameter direction outer side of a carcass (for example, see Japanese Patent Application Laid-Open (JP-A) No. 2007-069745 and Japanese Patent Application National Publication No. 2012-523340). Reference is also made to US 2016/068022 A1, EP 2233320 A1 and WO 2018/012640 A1.

### SUMMARY

### TECHNICAL PROBLEM

Adjustment of the modulus of elasticity of the resin in a belt that includes a resin layer can be considered. However, if the modulus of elasticity is raised, durability of the belt may deteriorate.

In consideration of the circumstances described above, an object of the present invention is to assure durability of a belt provided with a resin layer in a pneumatic tire that includes the belt.

### SOLUTION TO PROBLEM

A pneumatic tire according to the present invention includes: a carcass that spans from one bead portion to another bead portion; a belt that is disposed at an outer side, in a tire radial direction, of the carcass and includes at least a resin layer; a tread portion disposed at an outer side, in the tire radial direction, of the belt; and a side portion disposed at an outer side, in a tire width direction, of the carcass. When: L 1 represents a first reference line that, viewed in a section cut along a tire rotation axis, that passes through an outermost portion, in the tire radial direction, of an outer surface of the tread portion and that is parallel with the tire rotation axis, P represents an intersection between a tread-side imaginary line, viewed in the section cut along the tire rotation axis, which is an extension to an outer side, in the tire width direction, of an outline of the outer surface of the tread portion, and a side-side imaginary line that is an extension to an outer side, in the tire radial direction, of an outline of an outer surface of the side portion; A represents a dimension measured in the tire radial direction from the tire rotation axis to the first reference line L 1, B represents a dimension measured in the tire radial direction from the first reference line L1 to the intersection P, is represented by B; a ratio B/A represents a proportional tread chamfer height TWH (%); L2 represents a second reference line that, viewed in the section cut along the tire rotation axis, that passes through an outermost portion, in the tire radial direction, of an outer side face, in the tire radial direction, of the belt and that is parallel with the tire rotation axis,; C represents a dimension measured in the tire radial direction from the tire rotation axis to the second reference line L2 , as viewed in the section cut along the tire rotation axis, D represents a dimension measured in the tire radial direction from the second reference line L2 to an end, in the tire width direction, of the outer side face, in the tire radial direction, of the belt, and a ratio D/C represents a proportional belt chamfer height BWH (%), a proportional tread chamfer height TWH and a proportional belt chamfer height BWH fall in a region of a graph, in which proportional belt chamfer height BWH values are represented by a horizontal axis X and proportional tread chamfer height TWH values are represented by a vertical axis Y, the region being at a side of a straight line expressed by the formula Y = -2.43X+17.9, at which the values of the proportional tread chamfer height TWH and the proportional belt chamfer height BWH are smaller, characterized in that the proportional belt chamfer height BWH is at least 2.5%.

In the pneumatic tire according to the present invention, the proportional tread chamfer height TWH and the proportional belt chamfer height BWH are specified so as to fall in the region of the graph. In the graph, proportional belt chamfer height BWH values are plotted on the horizontal axis X and proportional tread chamfer height TWH values are plotted on the vertical axis Y. The region is bounded by the straight line expressed by the formula Y = -2.43X+17.9 and is at the side of the straight line at which values of the proportional tread chamfer height TWH and proportional belt chamfer height BWH are smaller. Thus, bending deformation in the vicinity of a belt end when the tread portion is in ground contact with a road surface tends to be suppressed, and strain in the resin layer of the belt tends to be suppressed. As a result, durability of the belt may be assured.

### ADVANTAGEOUS EFFECTS

According to the pneumatic tire of the present invention as described above, an excellent effect is provided in that durability of the belt may be assured.

### BRIEF DESCRIPTION OF DRAWINGS

Fig. 1 is a sectional diagram, cut along a tire rotation axis, showing a pneumatic tire according to a first exemplary embodiment of the present invention.
Fig. 2 is a sectional diagram of a belt illustrating a belt chamfer height.
Fig. 3 is a graph showing a relationship between proportional tread chamfer height, proportional belt chamfer height and durability limits of the belt.
Fig. 4 is a sectional diagram, cut along the tire rotation axis, showing a pneumatic tire according to a second exemplary embodiment of the present invention.

### DETAILED DESCRIPTION

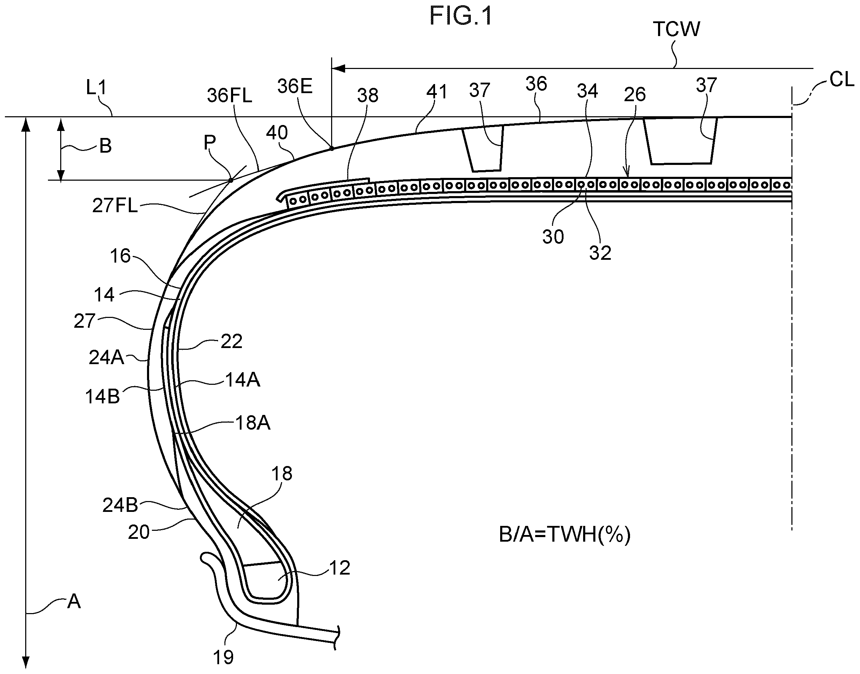

A pneumatic tire 10 according to an exemplary embodiment of the invention is described using Fig. 1 to Fig. 3.

As shown in Fig. 1, the pneumatic tire 10 according to the present exemplary embodiment is, for example, a "radial pneumatic tire" to be used on a car. The pneumatic tire 10 is provided with a pair of bead portions 20 in which bead cores 12 are embedded. A carcass 16 is formed of a single-layer carcass ply 14 spanning between one of the bead portions 20 and the other of the bead portions 20 (only the one of the bead portions 20 is shown in Fig. 1). Fig. 1 shows a shape of the pneumatic tire 10 mounted to a standard rim 19 in a natural state prior to being filled with air (internal pressure = atmospheric pressure). The pneumatic tire 10 according to the present exemplary embodiment is for use on a car.

The tire size is 225/40 R18.

The carcass ply 14 is formed by covering plural cords (not shown in the drawings) that extend in a radial direction of the pneumatic tire 10 with a coating rubber (not shown in the drawings). Thus, the pneumatic tire 10 according to the present exemplary embodiment is what is known as a radial pneumatic tire. A material of the cords of the carcass ply 14 is, for example, polyethylene terephthalate but may be an alternative conventional, publicly known material.

Tire width direction end portions of the carcass ply 14 are folded back toward the tire radial direction outer side around the bead cores 12. A portion of the carcass ply 14 that extends from the one bead core 12 to the other bead core 12 is referred to as a main body portion 14A, and portions of the carcass ply 14 that are folded back from the bead cores 12 are referred to as folded-back portions 14B.

A cross-sectional shape of the main body portion 14A of the carcass ply 14 of the pneumatic tire 10 according to the present exemplary embodiment is similar to a cross-sectional shape in a conventional ordinary pneumatic tire. The cross-sectional shape is relatively flat with a substantially constant radius in the vicinity of a tire equator plane CL, and the radius decreases in vicinities of shoulder portions.

A bead filler 18 whose thickness tapers toward the tire diameter direction outer side from each bead core 12 is disposed between the main body portion 14A and the folded-back portion 14B. Portions of the pneumatic tire 10 according to the present exemplary embodiment at the tire diameter direction inner sides relative to tire diameter direction outer side ends 18A of the bead fillers 18 serve as the bead portions 20.

An inner liner 22 formed of rubber is disposed at the pneumatic tire inner side of the carcass 16. At each tire width direction outer side of the carcass 16, a side rubber layer 24A is disposed at the tire diameter direction outer side of the carcass 16 and a side rubber layer 24B is disposed at the tire diameter direction inner side of the carcass 16. A side portion 27 is formed by the side rubber layer 24A and the side rubber layer 24B. A portion of the side rubber layer 24B is folded back at the diameter direction inner side of the bead core 12 and extends to a portion at the tire inner side of the bead core 12.

In the present exemplary embodiment, a tire case 25 is constituted by the bead cores 12, the carcass 16, the bead fillers 18, the inner liner 22, the side rubber layers 24A and the side rubber layers 24B. In other words, the tire case 25 is a pneumatic tire skeleton member forming a skeleton of the pneumatic tire 10.

### - Belt -

A belt 26 for constraining outer periphery portions of the carcass 16 and providing hoop effect is disposed at the outer side of a crown portion of the carcass 16, that is, at the tire diameter direction outer side of the carcass 16. The belt 26 according to the present exemplary embodiment is in area contact with an outer periphery face of the carcass 16. Similarly to the carcass 16, viewed in a section cut along the rotation axis, the belt 26 is formed in a relatively flat shape. The belt 26 in the vicinity of the tire equator plane CL has a relatively flat shape with a substantially constant radius; the radius decreases in vicinities of the shoulder portions.

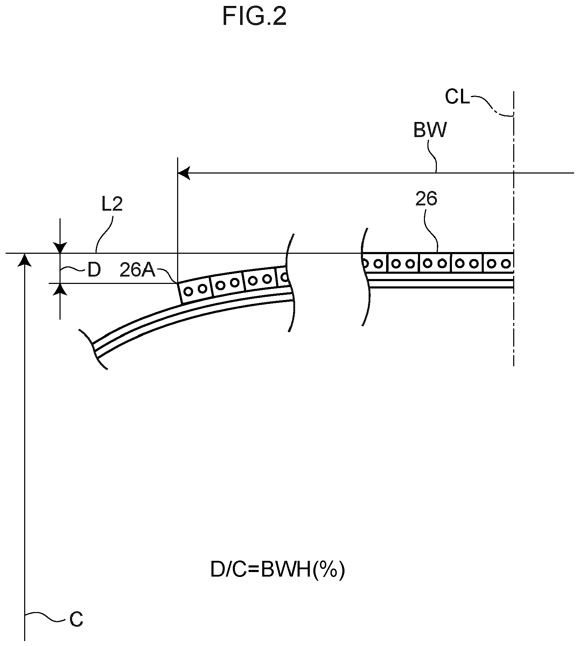

It is preferable if a width BW of the belt 26 measured along the tire axis direction, which is illustrated in Fig. 2, is at least 100% of a contact patch width TCW of a tread portion 36 measured along the tire axis direction, which is illustrated in Fig. 1. A preferable upper limit of the width BW of the belt 26 is 110% of the contact patch width TCW.

The contact patch width TCW of the tread portion 36 is a region that is loaded in accordance with a maximum load performance when the pneumatic tire 10 is mounted to a standard rim complying with the JATMA YEAR BOOK (from the Japan Automobile Tire Manufacturers Association, 2018 edition), filled to an internal pressure that is 100% of an air pressure (a maximum air pressure) corresponding with the maximum load performance (the bold-text load in the table of internal pressure against load performance) in the JATMA YEAR BOOK for the employed size and ply rating, and disposed such that the rotation axis thereof is parallel with a horizontal plate in a static state. A usage site or production site complies with the respective standards when the TRA standards and the ETRTO standards are applied. In Fig. 1, the reference symbol 36E indicates a contact patch end of the tread portion 36.

In-plane shear stiffness of the belt 26 is preferably equal to or higher than an in-plane shear stiffness of a belt of a pneumatic radial tire with a conventional structure in which a cord is covered with rubber.

The belt 26 according to the present exemplary embodiment is formed by winding round a resin-covered cord 34 with a rectangular cross section. In the resin-covered cord 34, a plural number (two in the present exemplary embodiment) of reinforcing cords 30 are covered with a resin 32. A fabrication method of the belt 26 is described below.

It is preferable if cords employed as the reinforcing cords 30 of the belt 26 are thicker and greater in strength (tensile strength) than the cords of the carcass ply 14. The reinforcing cords 30 of the belt 26 may be constituted of monofilaments (single fibers) of metal fiber, organic fiber or the like, or of multifilaments (twisted fibers) in which these fibers are twisted. The reinforcing cords 30 according to the present exemplary embodiment are steel cords. The reinforcing cords 30 that are employed may be, for example, "1×5" steel cords with a diameter of 0.225 mm; steel cords with alternative conventional, publicly known constitutions may be employed.

A resin material employed for the resin 32 covering the reinforcing cords 30 is a resin material with a higher tensile modulus of elasticity than rubber materials constituting the side rubber layers 24A and 24B and a rubber material constituting a tread rubber layer 41, which is described below. A thermoplastic resin, thermoplastic elastomer (TPE), thermosetting resin or the like featuring resilience may be employed as the resin 32 covering the reinforcing cords 30. In consideration of resilience during running and moldability during fabrication, it is desirable to employ a thermoplastic elastomer.

Thermoplastic elastomers that can be mentioned include polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), dynamically vulcanized thermoplastic elastomers (TPV), and the like.

Thermoplastic resins that can be mentioned include polyurethane resins, polyolefin resins, vinyl chloride resins, polyamide resins, and the like. For example, a thermoplastic resin material that may be employed has a deflection temperature under load (0.45 MPa load) as defined in ISO 75-2 or ASTM D648 of at least 78°C, a tensile yield strength as defined in JIS K7113 of at least 10 MPa, a tensile elongation at break as defined in JIS K7113 of at least 50%, and a Vicat softening temperature as defined in JIS K7206 (method A) of at least 130°C.

It is preferable if the tensile modulus of elasticity of the resin 32 covering the reinforcing cords 30 as defined in JIS K7113: 1995 is at least 50 MPa. It is also preferable if an upper limit of the tensile modulus of elasticity of the resin 32 covering the reinforcing cords 30 is not more than 1000 MPa. It is particularly preferable if the tensile modulus of elasticity of the resin 32 covering the reinforcing cords 30 is within the range 200 to 500 MPa.

A thickness dimension of the belt 26 according to the present exemplary embodiment is preferably greater than a diameter dimension of the reinforcing cords 30. That is, it is preferable if the reinforcing cords 30 are completely embedded in the resin 32. When the pneumatic tire 10 is for use on a car, it is preferable if the thickness dimension of the belt 26 is, to be specific, at least 0.70 mm.

### - Layer -

As shown in Fig. 1, a vicinity of an end portion 26A of the belt 26 in the tire width direction is covered from the tire diameter direction outer side by a belt-shaped layer 38. It is preferable if the layer 38 covers at least the reinforcing cord 30 that is at the tire width direction outermost side of the belt 26 from the tire diameter direction outer side thereof. It is more preferable if the layer 38 covers a curved portion of the belt 26. The layer 38 covers the end portion 26A of the belt 26 from the tire width direction outer side and extends to the tire width direction outer side beyond the end portion 26A of the belt 26.

The layer 38 that is employed is, for example, plural cords (not shown in the drawings) arrayed in parallel and coated with rubber. The cords that are employed in the layer 38 may be, for example, organic fiber cords or steel cords. If steel cords are employed in the layer 38, the steel cords that are employed have lower flexural stiffness than the cords employed in the belt 26, that is, are thinner than the cords employed in the belt 26. The layer 38 may employ a woven material formed of fibers or the like or a nonwoven fabric instead of cords. Further, the layer 38 may employ cords, fibers or a nonwoven fabric, covered with a resin.

The layer 38 may be constituted of only a rubber material or resin material. In this case, the rubber material or resin material that is employed to constitute the layer 38 has a tensile modulus of elasticity between the tensile modulus of elasticity of the resin 32 covering the reinforcing cords 30 and the tensile moduli of elasticity of the rubber materials constituting the side rubber layer 24 and the rubber material constituting the tread portion 36.

When a stiffness distribution in the tire width direction is viewed, there is a large step in stiffness between the belt 26 in which the reinforcing cords 30 are embedded and the tread portion 36 that is formed only of rubber; that is, there is a large difference in stiffness. Stresses tend to concentrate in regions in which stiffness changes greatly, such as the vicinity of the end portion 26A of the belt 26 and the like. In the pneumatic tire 10 according to the present exemplary embodiment, because the end portion 26A of the belt 26 is covered by the layer 38, viewed in the tire width direction, stiffness may be caused to change gradually from the end portion 26A of the belt 26 to the tread portion 36, and concentrations of stress in the vicinity of the end portion 26A may be suppressed.

In the present exemplary embodiment, only the vicinity of the end portion 26A of the belt 26 is covered by the layer 38 but, as required, the whole of the belt 26 may be covered from the tire diameter direction outer side by one or more layers of the layer 38 formed over a wide range.

### - Tread -

The tread rubber layer 41 is disposed at the tire diameter direction outer side of the belt 26, and the tread portion 36 is formed by the tread rubber layer 41. The rubber material that is employed for the tread rubber layer 41 may be a conventional common, publicly known rubber material. Grooves 37 for drainage are formed in the tread portion 36. A pattern of the tread portion 36 that is employed may be a conventional common, publicly known pattern.

### - Proportional tread chamfer height and proportional belt chamfer height -

As shown in Fig. 1, in the pneumatic tire 10 according to the present exemplary embodiment viewed in a section cut along the tire rotation axis (which is not shown in the drawings), a first reference line that passes through a tire diameter direction outermost portion of an outer surface of the tread portion 36 (a tire maximum diameter portion at the tire equator plane CL) and is parallel to the tire rotation axis is represented by L1. Viewed in the section cut along the tire rotation axis, an intersection of a tread-side imaginary line 36FL that is an extension to the tire width direction outer side of the outer surface of the tread portion 36 with a side-side imaginary line 27FL that is an extension to the tire diameter direction outer side of an outer surface of the side portion 27 is represented by P. A dimension measured in the tire diameter direction from the tire rotation axis to the first reference line L1 is represented by A, and a dimension measured in the tire diameter direction from the first reference line L1 to the intersection P is represented by B. The ratio B/A is referred to as the proportional tread chamfer height TWH (%). In the pneumatic tire 10 according to the present exemplary embodiment, the proportional tread chamfer height TWH is specified to be not more than 17.9%.

In the present exemplary embodiment, the intersection P serves as a tread end of the tread portion 36. The tread end (the intersection P) is disposed further to the tire width direction outer side than a contact patch end.

As shown in Fig. 2, in the pneumatic tire 10 according to the present exemplary embodiment viewed in the section cut along the tire rotation axis, a second reference line that passes through a tire diameter direction outermost portion of a tire diameter direction outer side face of the belt 26 and is parallel to the tire rotation axis is represented by L2. A dimension measured in the tire diameter direction from the tire rotation axis to the second reference line L2 is represented by C, and a dimension measured in the tire diameter direction from the second reference line L2 to the end portion 26A of the belt 26 is represented by D. The ratio D/C is referred to as the proportional belt chamfer height BWH (%). In the pneumatic tire 10 according to the present exemplary embodiment, the proportional belt chamfer height BWH is specified to be not more than 7.4%.

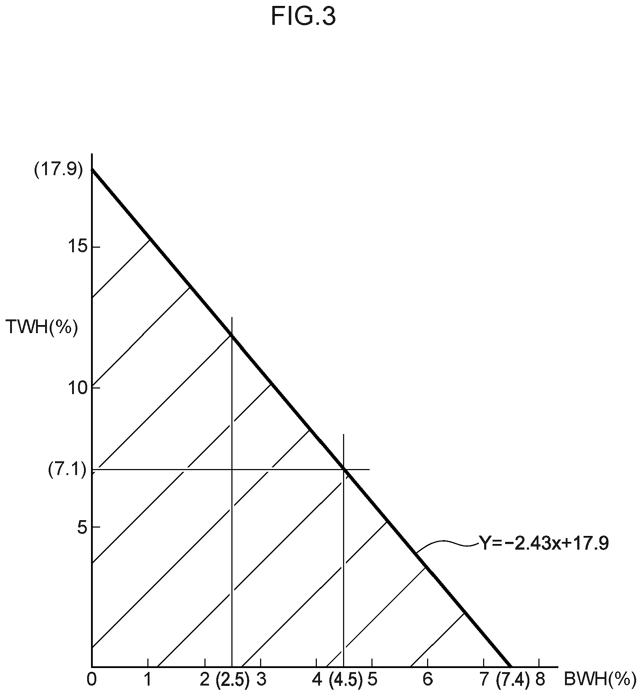

As depicted in Fig. 3, the proportional tread chamfer height TWH and proportional belt chamfer height BWH of the pneumatic tire 10 according to the present exemplary embodiment are specified so as to fall in a region of a graph, in which values of the proportional belt chamfer height BWH are plotted on a horizontal axis X and values of the proportional tread chamfer height TWH are plotted on a vertical axis Y, that is bounded by a straight line expressed by the formula Y = -2.43X+17.9, which region is at the side of the straight line of smaller values of the proportional tread chamfer height TWH and proportional belt chamfer height BWH. (This region (which includes the straight line) is marked with diagonal lines and is below referred to as the belt durability assurance region.)

### - Pneumatic tire fabrication method -

Now, an example of a fabrication method of the pneumatic tire 10 according to the present exemplary embodiment is described.

The inner liner 22 formed of a rubber material (unvulcanized), the bead cores 12, the carcass ply 14 in which cords are covered with a rubber material (unvulcanized), the bead fillers 18 formed of a rubber material (unvulcanized), the side rubber layers (unvulcanized) 24A, and the side rubber layers (unvulcanized) 24B are affixed to the outer periphery of a publicly known tire-forming drum (not shown in the drawings), forming the unvulcanized tire case 25.

The belt 26 is formed by winding the resin-covered cord 34, in which two of the reinforcing cords 30 are covered with the covering resin 32, round a belt-forming drum (not shown in the drawings) in a helical shape. At this time, adjacent windings of the resin-covered cord 34 are welded together. A cross-sectional shape of the resin-covered cord 34 according to the present exemplary embodiment is rectangular (an oblong shape that is wide horizontally). However, it is sufficient that the resin-covered cord 34 has a cross-sectional shape in which the adjacent windings can be joined together; for example, an alternative shape such as a parallelogram shape or the like is possible.

Thus, a resin layer that serves as an example of the present invention, in which the reinforcing cords 30 are embedded, is formed by adjacent windings of the resin-covered cord 34 being welded to one another.

Then, the resin 32 is cooled and solidified, the belt 26 is removed from the belt-forming drum, and the belt 26 is disposed at the diameter direction outer side of the tire case 25 on the tire-forming drum. Pressure is applied from the inner side of the tire case 25 and the unvulcanized tire case 25 is expanded. As a result, the outer periphery face of the tire case 25, which is to say the outer periphery face of the carcass 16 and an outer periphery face of a gap-filling member 28, are pressure-adhered to an inner periphery face of the belt 26.

Thereafter, the layer 38 is affixed so as to cover both end portions of the belt 26. Finally, similarly to fabrication of an ordinary pneumatic tire, the unvulcanized tread portion 36 is affixed to an outer periphery face of the belt 26, completing a green tire.

The green tire that is fabricated in this manner is vulcanization-molded in a vulcanizing mold in the same manner as an ordinary pneumatic tire, completing the pneumatic tire 10.

### - Operation and Effects -

Now, operation and effects of the pneumatic tire 10 according to the present exemplary embodiment are described.

In the pneumatic tire 10 according to the present exemplary embodiment, because the crown portion of the carcass 16 is reinforced by the belt 26 in which the reinforcing cords 30 wound in helical shapes are covered with the resin 32, weight may be reduced compared to a belt of a conventional pneumatic tire that is formed of plural layers constituted with two or more belt plies, and fabrication is simpler.

The above-mentioned formula Y = -2.43X+17.9 and the belt durability assurance region in Fig. 3 are derived on the basis of calculation results from simulations.

In the belt 26 according to the present exemplary embodiment, the tensile modulus of elasticity of the resin 32 covering the reinforcing cords 30 is higher than the tensile moduli of elasticity of the rubber materials constituting the side rubber layers 24A and 24B and the rubber material constituting the tread portion 36, the value of the tensile modulus of elasticity of the resin 32 is at least 50 MPa, and the thickness of the belt 26 is assured to be at least 0.7 mm. Therefore, in-plane shear stiffness of the belt 26 in the tire width direction may be thoroughly assured, and may be higher than in conventional tires.

Because the in-plane shear stiffness of the belt 26 is assured, sufficient lateral force may be generated when a slip angle is applied to the pneumatic tire 10. Thus, steering stability may be assured and responsiveness may be improved.

In addition, out-of-plane shear stiffness of the belt 26 is assured. Therefore, when a large lateral force is applied to the pneumatic tire 10, buckling of the tread portion 36 (a phenomenon in which the surface of the tread portion 36 undulates and a portion of the tread portion 36 separates from the ground) may be suppressed.

In the pneumatic tire 10 according to the present exemplary embodiment, because the belt 26 with a high in-plane shear stiffness is employed and the width BW of the belt 26 is at least 75% of the contact patch width TCW of the tread portion 36, stiffness of a vicinity of a shoulder portion 40 may be raised. The shoulder portion 40 is a region at the outer side in the tire width direction relative to the contact patch end 36E of the tread portion 36.

In the pneumatic tire 10 according to the present exemplary embodiment, because the belt 26 has a single-layer structure, thickness of the belt 26 may be reduced compared to a conventional structure with two or more belt plies. Thickness of the tread portion 36 may be increased by a corresponding amount, and depths of the grooves 37 may be increased. As a result, a lifespan of the pneumatic tire 10 may be extended.

In the belt 26 of the pneumatic tire 10, the reinforcing cords 30 are wound round in the helical shape and there are no regions of the circumference in which the reinforcing cords 30 are superposed in the tire diameter direction. Thus, the thickness of the belt 26 is uniform in the pneumatic tire circumference direction, and uniformity of the pneumatic tire 10 is excellent.

If the thickness t of the belt 26, which is to say the thickness of the resin 32, were less than 0.7 mm, it might not be possible to make the reinforcing cords 30 embedded in the resin 32 thick and provide the hoop effect.

If the thickness BW of the belt 26 were less than 75% of the contact patch width TCW of the tread portion 36, the hoop effect of the belt 26 might be insufficient, and it might be difficult to suppress the generation of noise in the vicinity of the shoulder portion 40. Alternatively, if the thickness BW of the belt 26 were greater than 100% of the contact patch width TCW of the tread portion 36, the hoop effect would plateau and the belt 26 would be wider than necessary, leading to an increase in weight of the pneumatic tire 10.

In the pneumatic tire 10 according to the present exemplary embodiment, as depicted by the graph in Fig. 3, the proportional tread chamfer height TWH and proportional belt chamfer height BWH are specified so as to fall in the region of the graph (the belt durability assurance region marked with diagonal lines angled upward to the right, including the straight line) bounded by the straight line expressed by the formula Y = -2.43X+17.9 in which region the proportional tread chamfer height TWH and proportional belt chamfer height BWH are smaller than at the straight line. Consequently, strain produced in the resin 32 of the belt 26 during running may be suppressed, and durability of the belt 26 may be assured.

If the proportional tread chamfer height TWH of the tread portion 36 were raised, ground contact during high-speed running would be less likely in the vicinity of the contact patch end 36E of the tread portion 36, that is, at the shoulder portion 39. Therefore, uneven wear and heat generation in vicinities of the shoulder portions tend to be suppressed.

To improve high-speed durability of the pneumatic tire 10, it is preferable to raise the proportional tread chamfer height TWH within a range that does not depart from the above-described belt durability assurance region. For example, it is preferable if the proportional tread chamfer height TWH is at least 7.1%. A proportional tread chamfer height TWH of 7.1% or more enables continuous running at a speed of 310 km/h.

When the width of the belt 26 is increased, the proportional belt chamfer height BWH is set to 2.5% or more, such that the end portion 26A of the belt 26 is not too close to the tire surface.

### = Second Exemplary Embodiment =

Now, the pneumatic tire 10 is described in accordance with a second exemplary embodiment of the present invention.

Structures that are the same as in the first exemplary embodiment are assigned the same reference symbols and are not described here.

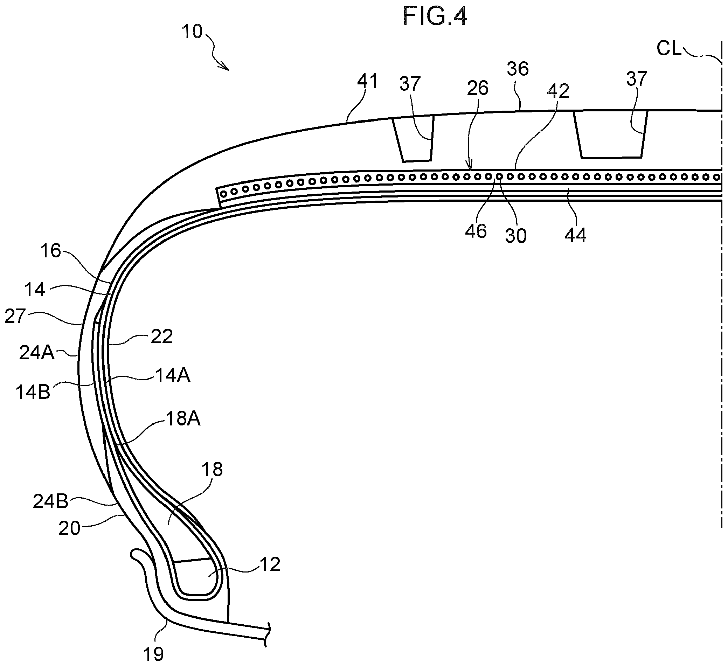

As shown in Fig. 4, the belt 26 of the pneumatic tire 10 according to the present exemplary embodiment includes a rubber-covered spiral belt layer 42 that is wound in a helical shape and a resin layer 44. The rubber-covered spiral belt layer 42 is formed by the reinforcing cords 30 being covered with rubber and wound round. The resin layer 44 is formed only of a resin material, which is integrated with the side of the rubber-covered spiral belt layer 42 at which the carcass 16 is disposed. In Fig. 4, the reference symbol 46 indicates the rubber covering the reinforcing cords 30. A tensile modulus of elasticity of the resin layer 44 is specified to be higher than that of the rubber 46 covering the reinforcing cords 30.

In fabrication of the belt 26 according to the present exemplary embodiment, the resin layer 44 in a circular tube shape is disposed on the outer periphery of a belt-shaping drum, and the reinforcing cords 30 covered with rubber (unvulcanized) are wound in the helical shape round an outer periphery face of the resin layer. Thus, the resin layer 44 and rubber-covered spiral belt layer 42 on the outer periphery of the belt-shaping drum are integrated, forming the belt 26.

In the belt 26 according to the present exemplary embodiment, because the resin layer 44 with a high tensile modulus of elasticity is integrated with the rubber-covered spiral belt layer 42 formed of the rubber-covered reinforcing cords 30 in the helical shape, in-plane shear stiffness of the belt 26 may be higher than in a structure without the resin layer 44.

As a resin material constituting the resin layer 44, a resin material the same as the resin 32 of the resin-covered cord 34 according to the first exemplary embodiment may be employed, or a different kind of resin material from the resin 32 according to the first exemplary embodiment may be employed.

The resin layer 44 that is employed may be formed by injection molding or, if the diameter is constant, may be formed by cutting an extrusion-molded circular resin tube to a predetermined length. The resin layer 44 may be fabricated by any method provided the resin layer 44 can be formed as a circular resin tube.

The belt 26 according to the present exemplary embodiment may be formed by winding the resin-covered reinforcing cords 30 round the outer periphery face of the tubular resin layer 44 in the helical shape. Because reference points for winding to a determined width are present, the rubber-covered reinforcing cords 30 may be wound more easily than in a structure in which the rubber-covered reinforcing cords 30 are wound directly onto the outer periphery face of a belt-forming drum, and the belt 26 may be formed more easily in a circular tube shape with excellent uniformity.

In the belt 26 of the pneumatic tire 10 according to the present exemplary embodiment, because the resin layer 44 is integrated with the rubber-covered spiral belt layer 42 that is formed by the rubber-covered reinforcing cords 30 being wound round in the helical shape, similarly to the belt 26 of the pneumatic tire 10 according to the first exemplary embodiment, out-of-plane shear stiffness may be raised.

### - Alternative Embodiments -

Hereabove, exemplary embodiments of the present invention are described. The present invention is not limited by these descriptions and it will be clear that numerous modifications beyond these descriptions may be embodied within a technical scope not departing from the scope of the claims.

In the belt 26, it is sufficient to provide a resin layer that is continuous at least in the width direction from one end side to the other end side; cord arrangements, layer thicknesses and the like are not limited by the exemplary embodiments described above.

The structure of the present invention may also be applied to run-flat pneumatic tires in which side portions are reinforced with reinforcing rubber, and may be applied to pneumatic tires to be mounted to vehicles other than cars.

## Claims

1. A pneumatic tire (10), comprising:
a carcass (16) that spans from one bead portion (20) to another bead portion (20);
a belt (26) that is disposed at an outer side, in a tire radial direction, of the carcass (16) and includes at least a resin layer (44);
a tread portion (36) disposed at an outer side, in the tire radial direction, of the belt (26); and
a side portion (27) disposed at an outer side, in a tire width direction, of the carcass (16), wherein, when:
L1 represents a first reference line, viewed in a section cut along a tire rotation axis, that passes through an outermost portion, in the tire radial direction, of an outer surface of the tread portion (36) and that is parallel with the tire rotation axis,
P represents an intersection between a tread-side imaginary line, viewed in the section cut along the tire rotation axis, which is an extension to an outer side, in the tire width direction, of an outline of the outer surface of the tread portion (36), and a side-side imaginary line that is an extension to an outer side, in the tire radial direction, of an outline of an outer surface of the side portion (27),
A represents a dimension measured in the tire radial direction from the tire rotation axis to the first reference line L1,
B represents a dimension measured in the tire radial direction from the first reference line L1 to the intersection P,
a ratio B/A represents a proportional tread chamfer height TWH (%),
L2 represents a second reference line, viewed in the section cut along the tire rotation axis, that passes through an outermost portion, in the tire radial direction, of an outer side face, in the tire radial direction, of the belt (26) and that is parallel with the tire rotation axis,
C represents a dimension measured in the tire radial direction from the tire rotation axis to the second reference line L2,
as viewed in the section cut along the tire rotation axis, D represents a dimension measured in the tire radial direction from the second reference line L2 to an end, in the tire width direction, of the outer side face, in the tire radial direction, of the belt (26), and
a ratio D/C represents a proportional belt chamfer height BWH (%),
a proportional tread chamfer height TWH and a proportional belt chamfer height BWH fall in a region of a graph, in which proportional belt chamfer height BWH values are represented by a horizontal axis X and proportional tread chamfer height TWH values are represented by a vertical axis Y, the region being at a side of a straight line expressed by the formula Y = -2.43X+17.9, at which the values of the proportional tread chamfer height TWH and the proportional belt chamfer height BWH are smaller, **characterized in that**
the proportional belt chamfer height BWH is at least 2.5%.

2. The pneumatic tire (10) according to claim 1, wherein the proportional tread chamfer height TWH is at least 7.1%.

## Patentansprüche

1. Luftreifen (10), Folgendes umfassend:
eine Karkasse (16), die sich von einem Wulstabschnitt (20) zu einem anderen Wulstabschnitt (20) erstreckt;
einen Gürtel (26), der an einer Außenseite in einer Reifenradialrichtung der Karkasse (16) angeordnet ist und mindestens eine Harzschicht (44) einschließt;
einen Laufflächenabschnitt (36), der an einer Außenseite in der Reifenradialrichtung des Gürtels (26) angeordnet ist; und
einen Seitenabschnitt (27), der an einer Außenseite in Reifenbreitenrichtung der Karkasse (16) angeordnet ist, wobei, wenn:
L1 eine erste Bezugslinie darstellt, betrachtet in einem Querschnitt entlang einer Reifenrotationsachse, die durch einen äußersten Abschnitt in der Reifenradialrichtung einer Außenfläche des Laufflächenabschnitts (36) verläuft und die parallel zur Reifenrotationsachse ist,
P einen Schnittpunkt zwischen einer imaginären Linie auf der Laufflächenseite, betrachtet in dem Querschnitt entlang der Reifenrotationsachse, die eine Verlängerung eines Umrisses der Außenfläche des Laufflächenabschnitts (36) zu einer Außenseite in der Reifenbreitenrichtung ist, und einer imaginären Linie von Seite zu Seite darstellt, die eine Verlängerung eines Umrisses einer Außenfläche des Seitenabschnitts (27), in der Reifenradialrichtung, zu einer Außenseite ist,
A eine Abmessung darstellt, die in der Reifenradialrichtung von der Rotationsachse des Reifens zur ersten Referenzlinie L1 gemessen wird,
B eine Abmessung darstellt, die in der Reifenradialrichtung von der ersten Bezugslinie L1 bis zum Schnittpunkt P gemessen wird,
ein Verhältnis B/A eine proportionale Laufflächenfasenhöhe TWH (%) darstellt,
L2 eine zweite Bezugslinie darstellt, betrachtet im Querschnitt entlang der Reifenrotationsachse, die durch einen äußersten Teil, in der Reifenradialrichtung, einer äußeren Seitenfläche, in der Reifenradialrichtung, des Gürtels (26) verläuft und die parallel zur Reifenrotationsachse ist,
C eine Abmessung darstellt, die in der Reifenradialrichtung von der Rotationsachse des Reifens zur zweiten Referenzlinie L2 gemessen wird, im Querschnitt entlang der Reifenrotationsachse betrachtet,
D eine Abmessung darstellt, die in der Reifenradialrichtung von der zweiten Bezugslinie L2 bis zu einem Ende, in der Reifenbreitenrichtung, der äußeren Seitenfläche des Gürtels (26) in der Reifenradialrichtung gemessen wird, und
ein Verhältnis D/C eine proportionale Gürtelfasenhöhe BWH (%) darstellt,
eine proportionale Laufflächenfasenhöhe TWH und eine proportionale Gürtelfasenhöhe BWH in einen Bereich eines Diagramms fallen, in dem proportionale Gürtelfasenhöhen BWH-Werte durch eine horizontale Achse X und proportionale Laufflächenfasenhöhen TWH-Werte durch eine vertikale Achse Y dargestellt sind, wobei der Bereich auf einer Seite einer Geraden liegt, die durch die Formel Y = -2, 43X+17,9 ausgedrückt wird, an der die Werte der proportionalen Laufflächenfasenhöhe TWH und der proportionalen Gürtelfasenhöhe BWH kleiner sind, **dadurch gekennzeichnet, dass** die proportionale Gürtelfasenhöhe BWH mindestens 2,5% beträgt.

2. Luftreifen (10) nach Anspruch 1, wobei die proportionale Laufflächenfasenhöhe TWH mindestens 7,1 % beträgt.

## Revendications

1. Pneumatique (10), comprenant :
une carcasse (16) qui s'étend d'une partie de talon (20) vers une autre partie de talon (20) ;
une ceinture (26) qui est disposée au niveau d'un côté externe, dans une direction radiale du pneumatique, de la carcasse (16) et inclut au moins une couche de résine (44) ;
une partie de bande de roulement (36) disposée au niveau d'un côté externe, dans la direction radiale du pneumatique, de la ceinture (26) ; et
une partie latérale (27) disposée au niveau d'un côté externe, dans une direction de la largeur du pneumatique, de la carcasse (16), dans lequel, lorsque :
L1 représente une première ligne de référence, vue dans une section en coupe le long d'un axe de rotation du pneumatique, qui passe à travers une partie externe extrême, dans la direction radiale du pneumatique, d'une surface externe de la partie de bande de roulement (36) et qui est parallèle à l'axe de rotation du pneumatique ;
P représente une intersection entre une ligne imaginaire du côté de la bande de roulement, vue dans la section en coupe le long de l'axe de rotation du pneumatique, qui est une extension vers un côté externe, dans la direction de la largeur du pneumatique, d'un contour de la surface externe de la partie de bande de roulement (36), et une ligne imaginaire côté-côté qui est une extension vers un côté externe, dans la direction radiale du pneumatique, d'un contour d'une surface externe de la partie latérale (27) ;
A représente une dimension mesurée, dans la direction radiale du pneumatique, de l'axe de rotation du pneumatique vers la première ligne de référence L1 ;
B représente une dimension mesurée, dans la direction radiale du pneumatique, de la première ligne de référence L1 vers l'intersection P ;
un rapport B/A représente une hauteur de chanfrein proportionnelle de la bande de roulement TWH (%) ;
L2 représente une deuxième ligne de référence, vue dans la section en coupe le long de l'axe de rotation du pneumatique, qui passe à travers une partie externe extrême, dans la direction radiale du pneumatique, d'une face du côté externe, dans la direction radiale du pneumatique, de la ceinture (26) et qui est parallèle à l'axe de rotation du pneumatique ;
C représente une dimension mesurée, dans la direction radiale du pneumatique, de l'axe de rotation du pneumatique vers la deuxième ligne de référence L2, vue dans la section en coupe le long de l'axe de rotation du pneumatique,
D représente une dimension mesurée, dans la direction radiale du pneumatique, de la deuxième ligne de référence L2 vers une extrémité, dans la direction de la largeur du pneumatique, de la face du côté externe, dans la direction radiale du pneumatique, de la ceinture (26) ; et
un rapport D/C représente une hauteur de chanfrein proportionnelle de la ceinture BWH (%) ;
une hauteur de chanfrein proportionnelle de la bande de roulement TWH et une hauteur de chanfrein proportionnelle de la ceinture BWH sont comprises dans une région d'un graphique, dans lequel les valeurs de la hauteur de chanfrein proportionnelle de la ceinture TWH sont représentées par un axe horizontal X, et les valeurs de la hauteur de chanfrein proportionnelle de la bande de roulement sont représentées par un axe vertical Y, la région se situant au niveau d'un côté d'une ligne droite exprimée par la formule Y = -2,43X + 17,9, au niveau de laquelle les valeurs de la hauteur de chanfrein proportionnelle de la bande de roulement TWH et de la hauteur de chanfrein proportionnelle de la ceinture BWH sont plus réduites, **caractérisé en ce que** la hauteur de chanfrein proportionnelle de la ceinture BWH représente au moins 2,5%.

2. Pneumatique (10) selon la revendication 1, dans lequel la hauteur de chanfrein proportionnelle de la bande de roulement représente au moins 7,1%.
